# EUROPEAN PATENT SPECIFICATION

(11) **EP 4 601 022 B1**
(45) Date of publication and mention of the grant of the patent: **23.09.2026**
(21) Application number: 23907468.5
(22) Date of filing: 24.11.2023
(51) Int. Cl.: H01M 4/04, B30B 3/04, B30B 15/26

(54) **A METHOD FOR ROLLING ELECTRODE**
VERFAHREN ZUM WALZEN EINER ELEKTRODE
PROCÉDÉ PERMETTANT DE LAMINER UNE ÉLECTRODE

(30) Priority: 23.12.2022 KR 20220183575; 02.03.2023 KR 20230027509
(43) Date of publication of application: 13.08.2025
(73) Proprietor: LG Energy Solution, Ltd., Seoul 07335 (KR)
(72) Inventor: KIM, Min Ki, Daejeon 34122 (KR); KIM, Beom Su, Daejeon 34122 (KR); PARK, Keum Yong, Daejeon 34122 (KR); CHOI, Nak Won, Daejeon 34122 (KR); SONG, Youngwan, Daejeon 34122 (KR); CHOY, Sang Hoon, Daejeon 34122 (KR); SEOL, Jeong Soo, Daejeon 34122 (KR)
(74) Representative: Plasseraud IP
(86) International application number: PCT/KR2023/019158
(87) International publication number: WO 2024/136182

(56) References cited:
- WO-A1-2020/100561
- CN-A- 102 223 959
- JP-A- 2016 110 736
- JP-A- 2016 513 025
- KR-A- 20220 109 117
- KR-B1- 101 875 080
- KR-B1- 102 322 803
- US-A1- 2021 394 246

## Description

### [TECHNICAL FIELD]

### Cross Citation with Related Application(s)

This application claims the benefit of Korean Patent Application No. 10-2022-0183575 filed on December 23, 2022 and Korean Patent Application No. 10-2023-0027509 filed on March 2, 2023 in the Korean Intellectual Property Office.

The present disclosure relates to a method for rolling an electrode, and more specifically, to a method for rolling an electrode that can continuously and consistently achieve the desired electrode thickness according to the load measured at the time of rolling an electrode.

### [BACKGROUND]

The secondary battery can be formed by inserting an electrode assembly composed of a positive electrode plate, an negative electrode plate and a separator into a case, and then sealing the case. A positive electrode plate or an negative electrode plate (hereinafter, referred to as "electrode plate") can be configured by coating an active material slurry onto a positive electrode current collector or an negative electrode current collector in a predetermined thickness, and an electrode assembly may be formed by interposing a separator between the positive electrode plate and the negative electrode plate, and winding it in a j elly-roll shape many times or laminating it in a plurality of layers.

The manufacturing process of the secondary battery largely includes the electrode process, wherein the electrode process is divided into an active material mixing process, an active material coating process, a rolling process, a slitting process, a winding process, and the like. More specifically, the electrode plate may be formed of a coated portion coated with the active material slurry and an uncoated portion not coated with the active material slurry. A rolling process of rolling the electrode plate can be included so as to increase the adhesiveness between the coated active material slurry and the electrode current collector and increases the volume density of the active material. The rolled electrode plate can be cut into a predetermined size by passing through a cutter having a certain width after drying and used.

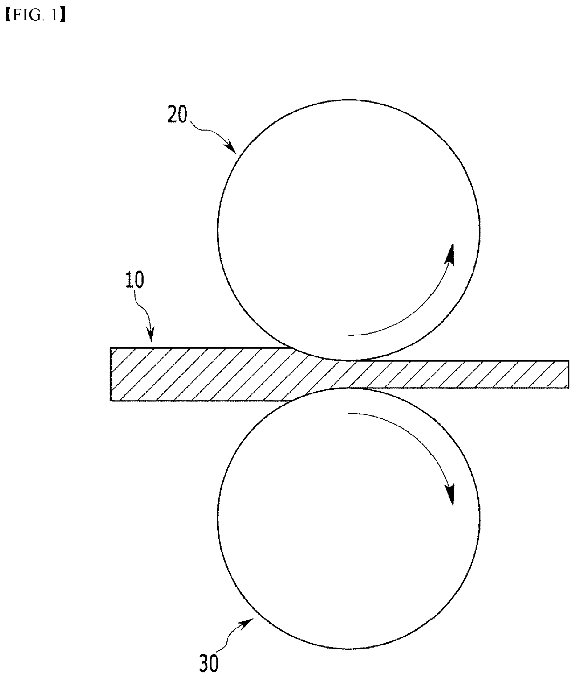

FIGS. 1 to 3 are conceptual diagrams showing a rolling apparatus for explaining an electrode rolling process.

Referring to FIG. 1, a rolling apparatus for rolling an electrode includes a pair of rolling rolls 20 and 30. The thickness of the electrode 10 decreases in a process of passing between the pair of rolling rolls.

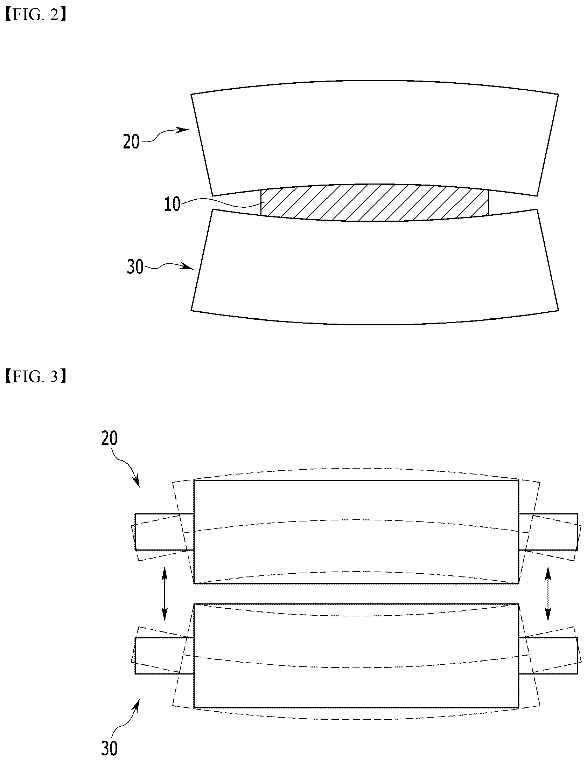

When a rolling operation is performed to manufacture a high-density electrode 10, the force (linear pressure) with which the electrode 10 tries to spread the two rolling rolls 20 and 30 is large, which causes bending of the rolls as shown in FIG. 2. Due to this bending deformation of the rolling rolls 20 and 30, the manufactured electrode 10 is formed thicker at the center of the width than at both side edges, which causes quality defects. In order to solve the thickness deviation in this rolling process, back pressure is applied to both ends of the rolling rolls 20 and 30 to suppress bending as shown in FIG. 3.

KR 2022 0109117 A discloses a controlling method of rolling apparatus for manufacturing an electrode. US 2021/0394246 A1 discloses a roll press device and control device. CN 102223969 A discloses a method and device for casting a cast part from a metal melt.

### [DETAILED DESCRIPTION OF THE INVENTION]

### [Technical Problem]

It is an object of the present disclosure to provide a method for rolling an electrode that can continuously and consistently achieve the desired electrode thickness according to the load measured at the time of rolling an electrode.

However, the technical problems to be solved by embodiments of the present disclosure are not limited to the above-described problems, and can be variously expanded within the scope of the technical idea included in the present disclosure.

### [Technical Solution]

A method for rolling an electrode according to the present disclosure is laid out in appended claim 1.

The step (C) follows the following Mathematical Equation 1, $\left|{P}_{target}-{P}_{measure}\right| \leq A$ wherein, P_{target} is the target load, Pₘₑₐₛᵤᵣₑ is the measured load, and A is a predetermined value, which is any one value selected from positive real numbers.

The step (E) and subsequently the step (B) and the step (C) may be repeatedly performed until the difference between the target load and the measured load does not deviate from a predetermined range.

The predetermined range in the step (D) may be an error tolerance range of the target load.

The method for rolling an electrode further comprises step (F) of adjusting the gap between the rolling rolls if there is a change in back pressure, wherein steps (B) and (C) are performed for the subsequent electrodes with the adjusted gap between the rolling rolls.

The change in back pressure may be an automatic change or a manual change.

In the step (B), when the moving speed of the electrode is maintained for a predetermined period of time, the load on the rolling rolls may be measured.

The rolling conditions when the target thickness of the electrode is achieved may be automatically stored in the data storage unit.

When primary rolling is performed on the electrode and subsequently secondary rolling is performed, the method may be applicable to at least one of the primary rolling and the secondary rolling.

### [Advantageous Effects]

The method for rolling an electrode according to the present disclosure can continuously and consistently achieve the desired electrode thickness according to the load measured at the time of rolling an electrode.

In addition, at the time of rolling an electrode, according to the present disclosure, the electrode can be rolled in parallel with a thickness gauge to achieve the desired thickness, and in some cases, according to the present disclosure, the electrode can be rolled without a thickness gage to achieve the desired thickness.

Therefore, the production efficiency of the electrode assembly can be maximized, the productivity can be improved, and the manufacturing costs can be reduced. In addition, the quality of the manufactured electrode assembly can be improved.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIGS. 1 to 3 are conceptual diagrams showing a rolling apparatus for explaining an electrode rolling process.
FIG. 4 shows a flow chart of a method for rolling an electrode according to an embodiment of the present disclosure.
FIG. 5 shows a flow chart when the back pressure is changed in the electrode rolling method according to FIG. 4.
FIG. 6 schematically shows a system (apparatus) for electrode rolling for realizing a method for rolling an electrode according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of several layers, and regions are exaggerated in order to clearly express them. In the drawings, for convenience of description, the thicknesses of some layers and regions are exaggerated.

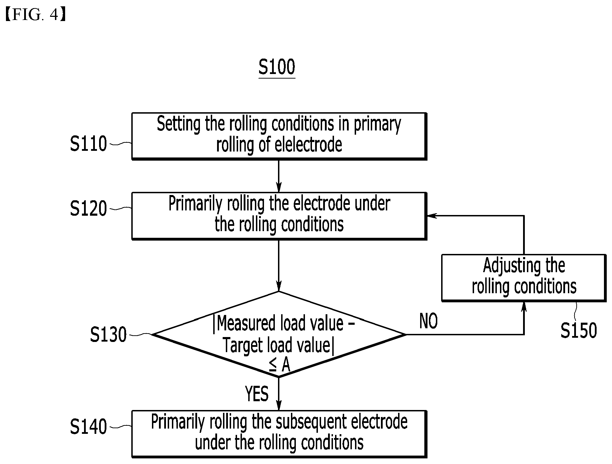

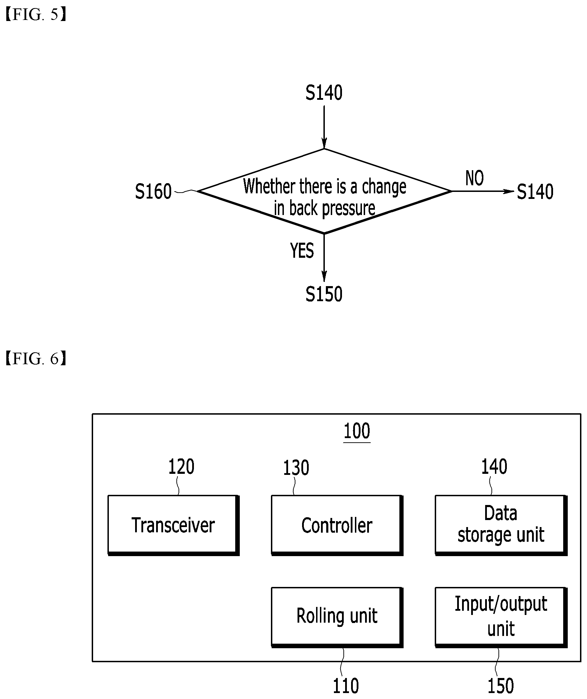

Now, a method for rolling an electrode according to an embodiment of the present disclosure will be described with reference to FIGS. 4 and 5.

FIG. 4 shows a flow chart of a method for rolling an electrode according to an embodiment of the present disclosure.

In the method for rolling an electrode illustrated in FIG. 4, a step S110 of setting the rolling conditions for the electrode is first performed. The rolling conditions are conditions for realizing the electrode 10 with the target thickness, and include a gap between a pair of rolling rolls 20 and 30, a back pressure on the rolling rolls 20 and 30, and a target load. The rolling conditions may be directly input to the input/output unit 150 of the system 100 for electrode rolling (see FIG. 6) that performs the method of rolling an electrode, or data of the rolling conditions previously stored in the data storage unit 140 can be applied.

Next, a step S120 of rolling the electrode 10 with the rolling rolls 20 and 30 is performed.

At the beginning of the process, the step S120 is performed under the rolling conditions in the step S110. In other words, the electrode 10 is rolled in a gap between the rolling rolls 20 and 30 set in the step S110 and under a back pressure on the rolling rolls 20 and 30 set in the step S110. Meanwhile, as will be described later, when the rolling conditions are adjusted during the rolling process, the step S120 is performed under the adjusted rolling conditions. This part will be described in detail in the step S150 below.

In the step S120, the actual load on the rolling rolls 20 and 30 at the time of rolling the electrode 10 is measured. This is because even if the target load is set in the step S110, the rolling may not be performed accurately with the target load in accordance with various environments of the actual rolling process, and errors may occur. In addition, the rolling conditions can be adjusted as described later according to the load measured in the step S120, thereby making it possible to realize the target thickness of the electrode 10.

The rolling rolls 20 and 30 may use at least one pair of rolling rolls facing each other, which are used in a normal electrode rolling process. The actual load of the rolling rolls 20 and 30 is measured by a load cell (not shown). For example, when the moving speed of the electrode 10 is maintained for a predetermined period of time, it is determined that the step S120 is in a normal operating state, and the actual load of the rolling rolls 20 and 30 can be measured. Alternatively, for example, the step S120 is performed and at the same time, the actual load of the rolling rolls 20 and 30 may also be continuously measured in real time.

Next, a step S130 of comparing the load measured during rolling and the target load is performed. The load measured during rolling means the actual load measured in the step S120. The target load is the target load set in the step S110, which refers to the load to be realized by the target thickness of the electrode 10. In the step S130, for example, the difference value between the measured load and the target load is calculated, and it is determined whether the difference value falls within a predetermined range (e.g., error tolerance range). For example, the following Mathematical Equation 1 can be applied. $\left|\left({P}_{target}\right)-\left({P}_{measure}\right)\right| \leq A$ wherein, P_{target} is the target load, Pₘₑₐₛᵤᵣₑ is the measured load, and A is a predetermined value (any one value selected from positive real numbers). A may be selected to match with various process environments and/or electrode types, or may be determined in advance. For example, A may be an error tolerance value previously set to match with various process environments and/or electrode types.

Next, as a result of comparison in the step S130, if the difference between the target load and the measured load does not deviate from a predetermined range, a step (S140) of continuously performing rolling for subsequent electrodes under the rolling conditions previously set is performed.

If the actual load measured during rolling of the electrode 10 in the step S120 satisfies a predetermined range (e.g., error tolerance range) based on the target load, it is determined that the rolling of the electrode 10 in the step S120 is being performed with a target load. In other words, it is determined that the electrode 10 is being rolled to the target thickness. Thereby, with respect to the electrodes 10 that subsequently enter the rolling rolls 20 and 30, the rolling can be continuously performed under the previously set rolling conditions (e.g., a gap between the rolling rolls 20 and 30, and a back pressure on the rolls 20 and 30).

However, as a result of comparison in the step S130, if the difference between the target load and the measured load deviates from a predetermined range, a step S150 of adjusting the gap between the rolling rolls by a predetermined amount is performed.

If the actual load measured during rolling of the electrode 10 in the step S120 does not satisfy a predetermined range (e.g., error tolerance range) based on the target load, it is determined that the rolling of the electrode 10 in the step S120 is not performed with the target load. In other words, it is determined that the electrode 10 is not rolled to the target thickness. Thereby, the gap between the rolling rolls 20 and 30 is adjusted so as to realize the target thickness for the electrode 10 that subsequently enters the rolling rolls 20 and 30.

In the step S150, the gap between the rolling rolls 20 and 30 is adjusted by a predetermined amount for a predetermined period of time. Thereafter, steps S120 and S130 are performed on the electrode 10 that subsequently enters the rolling rolls 20 and 30. That is, steps S120 and S130 are performed under the adjusted rolling conditions (adjusted gap between rolling rolls). At this time, as described above in the step S120, the actual load of the rolling rolls 20 and 30 for rolling the electrode 10 is measured under the adjusted rolling conditions (adjusted gap between rolling rolls). Further, the load measured during rolling is compared with the target load under the rolling conditions adjusted in the step S130.

Subsequently, as a result of comparison in the step S130, as described above in the step S140, if the difference between the target load and the measured load (i.e., the load in rolling under the adjusted rolling conditions) does not deviate from a predetermined range, rolling is continuously performed for subsequent electrodes under the adjusted rolling conditions. In other words, if the load within the error tolerance range of the target load is measured under the adjusted rolling conditions (adjusted gap between rolling rolls), the rolling of the electrode 10 may be continuously performed as in the step S140.

However, as a result of the comparison in the step S130, as described above in the step S150, if the difference between the target load and the measured load deviates from a predetermined range, the rolling conditions (gap between rolling rolls) are re-adjusted by a predetermined amount. In other words, if the load within the error tolerance range of the target load is not measured under the adjusted rolling conditions (adjusted gap between rolling rolls), the rolling conditions (gap between rolling rolls) are adjusted again through the step S150. By repeating steps S150, S120 and S130 in this way, the load within the error tolerance range of the target load is measured at the time of rolling the electrode 10 under the adjusted rolling conditions (adjusted gap between rolling rolls), so that rolling of the electrode 10 can be continuously performed as in the step S140.

Meanwhile, if rolling of the electrode 10 is continuously performed in the step S140, due to various process environment reasons, the desired thickness (target thickness) of the electrode 10 may not be realized, or the thickness of the electrode 10 may be non-uniform. In order to ensure that the electrode 10 can be normally and uniformly rolled to the target thickness, it is necessary to change the back pressure of the rolling rolls 20 and 30, depending on the case.

If such a back pressure is changed, a step S160 of adjusting a gap between the rolling rolls is further performed. In this regard, FIG. 5 shows a flow chart when the back pressure is changed in the electrode rolling method according to FIG. 4.

First, the change in back pressure may be an automatic change or a manual change. The automatic change means that when the process environment, etc. are changed, the back pressure applied to the rolling rolls 20 and 30 is changed according to an algorithm (program) previously set for the process. The manual change means that when an operator in the process sets a back pressure value and inputs it into the input/output unit 150, the back pressure applied to the rolling rolls 20 and 30 is changed by the back pressure value input into the input/output unit 150.

Further, when the back pressure applied to the rolling rolls 20 and 30 is changed, the load applied to the electrode 10 by the rolling rolls 20 and 30 is also changed. This is because the load is calculated by multiplying pressure and area, and the back pressure is a pressure applied in a direction opposite to the linear pressure, which is the pressure applied by the rolling rolls 20 and 30 to the electrodes. Meanwhile, since the load applied to the electrode 10 is changed by the rolling rolls 20 and 30, it is necessary to adjust the load applied to the electrode 10 so that it becomes the target load again.

Thereby, when there is a change in the back pressure, a step S160 of adjusting the gap between the rolling rolls is further performed. Based on the adjusted gap between the rolling rolls, the step S120 is performed, followed by the step S130 as described above.

Similarly, as a result of the comparison in the step S130, as described above in the step S140, if the difference between the target load and the measured load (i.e., the load in rolling under the adjusted rolling conditions) does not deviate from a predetermined range, the rolling is continuously performed for subsequent electrodes under the adjusted rolling conditions.

However, as a result of the comparison in the step S130, as described above in the step S150, if the difference between the target load and the measured load deviates from the predetermined range, the rolling conditions (gap between rolling rolls) are re-adjusted by a predetermined amount. When the electrode 10 is rolled under the adjusted rolling conditions (adjusted gap between rolling rolls), steps S150, S120 and S130 are repeated until a load within the error tolerance range of the target load is measured.

The above-mentioned embodiments of the present disclosure can be particularly usefully applied to processes in which a thickness gauge of the electrode 10 is not provided at the time of rolling the electrode 10. Alternatively, the rolled electrode 10 can be manufactured to a desired thickness (target thickness) without measuring the thickness of the electrode 10 one by one. This is because the rolling rolls 20 and 30 roll with a target load to realize the target thickness of the electrode 10. Of course, the present disclosure is not limited thereto, can be applied in parallel with a thickness gauge if a thickness gauge is provided, and can realize the thickness of the electrode 10 more efficiently to the desired thickness (target thickness).

The above-mentioned embodiments of the present disclosure can be applied, for example, to a manufacturing process of an anode. In some cases, in the case of an anode, a phenomenon in which the rolled electrode swells again after primary rolling (spring back phenomenon) may occur. Therefore, when manufacturing an anode, secondary rolling is performed after primary rolling. The above-mentioned embodiments of the present disclosure can be applied, for example, to primary rolling. This is because it is easy to realize the desired primary rolling thickness of the electrode with the target load of the rolling rolls 20 and 30 without measuring the thickness of the electrode 10. In other words, it is sufficient to measure the thickness of the final electrode manufactured by secondary rolling after primary rolling. However, the present disclosure is not limited to those described above, and can also be applied during secondary rolling of electrodes (anode). In addition, various modifications and changes can be made, such as the embodiments of the present disclosure being applicable to the manufacturing process of a positive electrode that can be sufficiently manufactured by primary rolling.

FIG. 6 schematically shows a system (apparatus) for electrode rolling for realizing a method for rolling an electrode according to an embodiment of the present disclosure.

The method of rolling an electrode according to an embodiment of the present disclosure can be realized in a system 100 for electrode rolling including a rolling unit 110, a transceiver 120, a controller 130, and an input/output unit 150 as shown in FIG. 6.

As the rolling unit 110, a rolling apparatus commonly used in the electrode manufacturing process can be used, and therefore, a detailed illustration thereof is omitted. The rolling unit 110 may include rolling rolls 20 and 30 as shown in FIG. 1, a back pressure cylinder (not shown), various sensors (not shown), and the like. The sensor may include a sensor that measures the gap between the rolling rolls 20 and 30, a load cell that measures the load of the rolling rolls 20 and 30, and the like, and additionally, may include a temperature sensor that measures the temperature of the rolling rolls 20 and 30, a speed sensor that measures the moving speed of the electrode or the driving speed of the rolling roll, and the like.

The transceiver 120 receives data transmitted from a sensor provided in the rolling unit 110 or receives data transmitted from an input/output unit 150 of an operator and transmits the data to the controller 130. Data transmitted to the controller 130 may include gap between rolling rolls, and/or a back pressure change (or back pressure) value as described above, and optionally may further include a rolling temperature, a rolling speed, and the like.

The controller 130 receives data such as these measured actual load and compares it with the target load. As a subsequent step, it is determined whether to perform the step S140 or not to perform the step S150. The controller 130 may be integrated into the system 100 for electrode rolling or connected to a data storage unit 140 provided in the outside.

In a process of performing the method of rolling an electrode according to an embodiment of the present disclosure, when a target load is realized, data regarding the rolling conditions (gap between rolling rolls, back pressure, rolling temperature, rolling speed, electrode moving speed, etc.) at that time may be stored in the data storage unit 140.

For components related to other devices required for realizing the method for rolling an electrode according to an embodiment of the present disclosure, refer to apparatuses used in a typical electrode rolling process.

According to the method of rolling an electrode according to an embodiment of the present disclosure, it is possible to realize the target thickness of the electrode 10 with a target load according to process conditions without a thickness gauge of the electrode 10 and without operator intervention. In other words, the desired thickness after rolling can be consistently achieved and maintained without the operator having to go through the process of confirming the thickness one by one. In addition, even when used in parallel with a thickness gauge, the desired thickness after rolling can be achieved and maintained more effectively and consistently.

Therefore, there is an effect of maximizing the efficiency of the electrode manufacturing process, increasing the productivity, and reducing the manufacturing costs.

In addition, according to the method of rolling an electrode according to the embodiment of the present disclosure, the thickness of the rolled electrode can be realized to be equal (constant), thereby equalizing and improving the quality of secondary batteries including electrodes manufactured thereby, and significantly lowering the defective rate.

### [Description of Reference Numerals]

10: electrode
20, 30: rolling roll
100: system for electrode rolling
110: rolling unit
120: transceiver
130: controller
140: data storage unit
150: input/output unit

## Claims

1. A method for rolling an electrode (10), comprising:
step (A) of setting rolling conditions for the electrode (S110); and
step (B) of rolling the electrode (S120) under the rolling conditions,
wherein the rolling conditions are conditions for realizing the electrode (10) with a target thickness and include a gap between a pair of rolling rolls (20, 30), a back pressure on the rolling rolls (20, 30), and a target load,
wherein the target thickness of the electrode (10) is realized by adjusting the rolling conditions according to the load measured in the step (B),
**characterized in that** the method further comprises
step (C) of comparing the load measured during rolling and the target load (S130);
step (D) of continuing rolling under the rolling conditions for subsequent electrodes (S140) if the difference between the target load and the measured load does not deviate from a predetermined range, and
step (E) of adjusting the gap between the rolling rolls by a predetermined amount (S150) if the difference between the target load and the measured load deviates from a predetermined range,
wherein after the step (E), the step (B) and the step (C) are performed for subsequent electrodes (10) with the adjusted gap between the rolling rolls (20, 30).

2. The method for rolling an electrode (10) according to claim 1, wherein:
the step (C) follows the following Mathematical Equation 1, $\left|{P}_{target}-{P}_{measure}\right| \leq A$
wherein, P_{target} is the target load, Pₘₑₐₛᵤᵣₑ is the measured load, and A is a predetermined value, which is any one value selected from positive real numbers.

3. The method for rolling an electrode (10) according to claim 1, wherein:
the step (E) and subsequently the step (B) and the step (C) are repeatedly performed until the difference between the target load and the measured load does not deviate from a predetermined range.

4. The method for rolling an electrode (10) according to any one of claims 2 to 3, wherein:
the predetermined range in the step (D) is an error tolerance range of the target load.

5. The method for rolling an electrode (10) according to claim 1, further comprising:
step (F) of adjusting the gap between the rolling rolls (S160) if there is a change in back pressure,
wherein steps (B) and (C) are performed for the subsequent electrodes (10) with the adjusted gap between the rolling rolls (20, 30).

6. The method for rolling an electrode (10) according to claim 5, wherein:
the change in back pressure is an automatic change or a manual change.

7. The method for rolling an electrode (10) according to claim 1, wherein:
in the step (B), when the moving speed of the electrode (10) is maintained for a predetermined period of time, the load on the rolling rolls (20, 30) is measured.

8. The method for rolling an electrode (10) according to claim 1, wherein:
the rolling conditions when the target thickness of the electrode (10) is achieved are automatically stored in the data storage unit (140).

9. The method for rolling an electrode (10) according to claim 1, wherein:
when primary rolling is performed on the electrode (10) and subsequently secondary rolling is performed, the method is applicable to at least one of the primary rolling and the secondary rolling.

## Patentansprüche

1. Verfahren zum Walzen einer Elektrode (10), umfassend:
einen Schritt (A) des Einstellens von Walzbedingungen für die Elektrode (S110); und
einen Schritt (B) des Walzens der Elektrode (S120) unter den Walzbedingungen,
wobei die Walzbedingungen Bedingungen zum Realisieren der Elektrode (10) mit einer Zieldicke sind und einen Spalt zwischen einem Paar Walzrollen (20, 30), einen Gegendruck auf die Walzrollen (20, 30) und eine Ziellast einschließen,
wobei die Zieldicke der Elektrode (10) durch Anpassen der Walzbedingungen gemäß der im Schritt (B) gemessenen Last realisiert wird,
**dadurch gekennzeichnet, dass** das Verfahren ferner umfasst:
einen Schritt (C) des Vergleichens der während des Walzens gemessenen Last und der Ziellast (S130);
einen Schritt (D) des Fortsetzens des Walzens unter den Walzbedingungen für nachfolgende Elektroden (S140), wenn die Differenz zwischen der Ziellast und der gemessenen Last nicht von einem vorbestimmten Bereich abweicht, und
einen Schritt (E) des Anpassens des Spalts zwischen den Walzrollen um einen vorbestimmten Betrag (S150), wenn die Differenz zwischen der Ziellast und der gemessenen Last von einem vorbestimmten Bereich abweicht,
wobei nach dem Schritt (E), der Schritt (B) und der Schritt (C) für nachfolgende Elektroden (10) mit dem angepassten Spalt zwischen den Walzrollen (20, 30) durchgeführt werden.

2. Verfahren zum Walzen einer Elektrode (10) nach Anspruch 1, wobei:
der Schritt (C) der folgenden mathematischen Gleichung 1 folgt, $\left|{P}_{target}-{P}_{measure}\right| \leq A$
wobei P_{target} die Ziellast ist, Pₘₑₐₛᵤᵣₑ die gemessene Last ist und A ein vorbestimmter Wert ist, der ein beliebiger aus positiven reellen Zahlen ausgewählter Wert ist.

3. Verfahren zum Walzen einer Elektrode (10) nach Anspruch 1, wobei:
der Schritt (E) und anschließend der Schritt (B) und der Schritt (C) wiederholt durchgeführt werden, bis die Differenz zwischen der Ziellast und der gemessenen Last nicht von einem vorbestimmten Bereich abweicht.

4. Verfahren zum Walzen einer Elektrode (10) nach einem der Ansprüche 2 bis 3, wobei: der vorbestimmte Bereich im Schritt (D) ein Fehlertoleranzbereich der Ziellast ist.

5. Verfahren zum Walzen einer Elektrode (10) nach Anspruch 1, ferner umfassend:
einen Schritt (F) des Anpassens des Spalts zwischen den Walzrollen (S160), wenn eine Änderung des Gegendrucks vorliegt,
wobei die Schritte (B) und (C) für die nachfolgenden Elektroden (10) mit dem angepassten Spalt zwischen den Walzrollen (20, 30) durchgeführt werden.

6. Verfahren zum Walzen einer Elektrode (10) nach Anspruch 5, wobei:
die Änderung des Gegendrucks eine automatische Änderung oder eine manuelle Änderung ist.

7. Verfahren zum Walzen einer Elektrode (10) nach Anspruch 1, wobei:
im Schritt (B), wenn die Bewegungsgeschwindigkeit der Elektrode (10) für eine vorbestimmte Zeitdauer aufrechterhalten wird, die Last auf den Walzrollen (20, 30) gemessen wird.

8. Verfahren zum Walzen einer Elektrode (10) nach Anspruch 1, wobei:
die Walzbedingungen, wenn die Zieldicke der Elektrode (10) erreicht ist, automatisch in der Datenspeichereinheit (140) gespeichert werden.

9. Verfahren zum Walzen einer Elektrode (10) nach Anspruch 1, wobei:
wenn ein Primärwalzen an der Elektrode (10) durchgeführt wird und anschließend ein Sekundärwalzen durchgeführt wird, das Verfahren auf mindestens eines von dem Primärwalzen und dem Sekundärwalzen anwendbar ist.

## Revendications

1. Procédé de laminage d'une électrode (10), comprenant :
une étape (A) de réglage des conditions de laminage pour l'électrode (S110) ; et
une étape (B) de laminage de l'électrode (S120) dans les conditions de laminage,
dans lequel les conditions de laminage sont des conditions pour réaliser l'électrode (10) avec une épaisseur cible et comprennent un écartement entre une paire de cylindres de laminage (20, 30), une contre-pression sur les cylindres de laminage (20, 30), et une charge cible,
dans lequel l'épaisseur cible de l'électrode (10) est réalisée en ajustant les conditions de laminage en fonction de la charge mesurée à l'étape (B),
**caractérisé en ce que** le procédé comprend en outre
une étape (C) de comparaison de la charge mesurée pendant le laminage et de la charge cible (S130) ;
une étape (D) de poursuite du laminage dans les conditions de laminage pour des électrodes suivantes (S140) si la différence entre la charge cible et la charge mesurée ne s'écarte pas d'une plage prédéterminée, et
une étape (E) d'ajustement de l'écartement entre les cylindres de laminage d'une quantité prédéterminée (S150) si la différence entre la charge cible et la charge mesurée s'écarte d'une plage prédéterminée,
dans lequel après l'étape (E), l'étape (B) et l'étape (C) sont mises en œuvre pour des électrodes suivantes (10) avec l'écartement ajusté entre les cylindres de laminage (20, 30).

2. Le procédé de laminage d'une électrode (10) selon la revendication 1, dans lequel :
l'étape (C) suit l'équation mathématique 1 suivante, $\left|{P}_{target}-{P}_{measure}\right| \leq A$
dans laquelle, P_{target} est la charge cible, Pₘₑₐₛᵤᵣₑ est la charge mesurée, et A est une valeur prédéterminée, qui est n'importe quelle valeur choisie parmi les nombres réels positifs.

3. Le procédé de laminage d'une électrode (10) selon la revendication 1, dans lequel : l'étape (E), puis l'étape (B) et l'étape (C) sont mises en œuvre de manière répétée jusqu'à ce que la différence entre la charge cible et la charge mesurée ne s'écarte pas d'une plage prédéterminée.

4. Le procédé de laminage d'une électrode (10) selon l'une quelconque des revendications 2 à 3, dans lequel :
la plage prédéterminée à l'étape (D) est une plage de tolérance d'erreur de la charge cible.

5. Le procédé de laminage d'une électrode (10) selon la revendication 1, comprenant en outre :
une étape (F) d'ajustement de l'écartement entre les cylindres de laminage (S160) s'il y a un changement de contre-pression,
dans lequel les étapes (B) et (C) sont mises en œuvre pour les électrodes suivantes (10) avec l'écartement ajusté entre les cylindres de laminage (20, 30).

6. Le procédé de laminage d'une électrode (10) selon la revendication 5, dans lequel :
le changement de contre-pression est un changement automatique ou un changement manuel.

7. Le procédé de laminage d'une électrode (10) selon la revendication 1, dans lequel :
à l'étape (B), lorsque la vitesse de déplacement de l'électrode (10) est maintenue pendant une période de temps prédéterminée, la charge sur les cylindres de laminage (20, 30) est mesurée.

8. Le procédé de laminage d'une électrode (10) selon la revendication 1, dans lequel :
les conditions de laminage lorsque l'épaisseur cible de l'électrode (10) est atteinte sont automatiquement stockées dans l'unité de stockage de données (140).

9. Le procédé de laminage d'une électrode (10) selon la revendication 1, dans lequel :
lorsqu'un laminage primaire est mis en œuvre sur l'électrode (10) et qu'ensuite un laminage secondaire est mis en œuvre, le procédé est applicable à au moins un laminage parmi le laminage primaire et le laminage secondaire.
